# EUROPEAN PATENT SPECIFICATION

(11) **EP 2 722 201 B1**
(45) Date of publication and mention of the grant of the patent: **25.03.2015**
(21) Application number: 13181145.7
(22) Date of filing: 21.08.2013
(51) Int. Cl.: B60C 23/04

(54) **Tire pressure sensor device setting method**
Verfahren zum Einstellen einer Reifendrucksensorvorrichtung
Procédé de réglage de dispositif de capteur de pression de pneu

(30) Priority: 16.10.2012 TW 101138120
(43) Date of publication of application: 23.04.2014
(73) Proprietor: CUB Elecparts Inc., Changhua County (TW)
(72) Inventor: Yu, San-Chuan, Changhua County (TW); Ko, Tzu-Wen, Changhua County (TW); Chen, Chi-Hung, Changhua County (TW)
(74) Representative: Becker Kurig Straus

(56) References cited:
- US-A1- 2008 094 198

## Description

### BACKGROUND OF THE INVENTION

### 1. Field of the Invention

The present invention relates to tire pressure monitoring technology and more particularly, to a tire pressure sensor device setting method.

### 2. Description of the Related Art

Except one to one type tire pressure sensor devices, there are other two types of tire pressure sensor devices commercially available. The setting of the first one of these other two types of tire pressure sensor devices is done by: storing different communication protocol software programs in the memory of the tire pressure sensor device, and then using a setting tool to transmit a communication protocol soft program designation code and trigger code to the tire pressure sensor device after installation of the tire pressure sensor device in a vehicle tire. The setting of the second end of the foresaid other two types of tire pressure sensor devices is done by: using a setting tool to transmit the communication protocol soft program to be executed to the tire pressure sensor device, which does not have any communication protocol software program set therein, after installation of the tire pressure sensor device in a vehicle tire, so that the tire pressure sensor device can store the received communication protocol software program in the memory thereof and run it. When using a setting tool to set either of the aforesaid two other two types of tire pressure sensor devices, signal transmission is performed wirelessly at the frequency of 315 KHz or 433 KHz. However, because wireless transmission is a non-directional transmission, error setting or alteration of setting by mistake may occur during the setting operation. For example, when the operator sets the tire pressure sensor device at the left front wheel, the tire pressure sensor device at the right front wheel may receive the setting signal that is to be transmitted to the tire pressure sensor device at the left front wheel, resulting in a setting mistake, or when the operator is setting one tire pressure sensor device of a car A, the tire pressure sensor devices of a nearby car B may receive the setting signal to have the existing setting be altered by mistake.

Another setting method and system for a programmable universal tire pressure monitor is disclosed in US patent document No. US 2008/094198 A1. US 2008/094198 A1 discloses the steps of: preparing a tire pressure monitor without started frst and then choosing a specific start signal from a processor. Transmitting the start signal to a programmer and the specific start signal will be transmitted into the tire pressure monitor from the programmer. By the way, the start signal will turn on the tire pressure monitor to process a specific coding program to communicate with an outside control module.

### SUMMARY OF THE INVENTION

The present invention has been accomplished under the circumstances in view. It is the main object of the present invention to provide a tire pressure sensor device setting method, which automatically locks up the setting after the setting is done.

It is another object of the present invention to provide a tire pressure sensor device setting method, which allows the setting of the tire pressure sensor device to be started subject to a specific operation step.

It is still another object of the present invention to provide a tire pressure sensor device setting method, which prevents the setting of the tire pressure sensor device from being altered by mistake or erroneously set.

To achieve these and other objects of the present invention, a tire pressure sensor device setting method comprises the step of: installing the tire pressure sensor device in a tire and starting it up, the step of enabling the main control processor to match the detected tire pressure value with a predetermined tire pressure reference value, the step of enabling the main control processor to accept a wireless signal from the receiver for altering the communication protocol of the tire pressure sensor device if the detected tire pressure value is greater than the tire pressure reference value, and the step of stopping the main control processor from receiving a wireless signal from the receiver so that the communication protocol of the tire pressure sensor device is locked up to finish the installation.

Further, in accordance with the tire pressure sensor device setting method, the tire pressure sensor device has mounted therein a blank memory unit.

Further, in an alternate form of the tire pressure sensor device setting method, the tire pressure sensor device has mounted therein a memory unit that has stored therein multiple communication protocol software programs.

Other advantages and features of the present invention will be fully understood by reference to the following specification in conjunction with the accompanying drawings, in which like reference signs denote like components of structure.

### BRIEF DESCRIPTION OF THE DRAWINGS

FIG. 1 is a system block diagram of a tire pressure sensor device according to the present invention.
FIG. 2 is an operation flow chart of a tire pressure sensor device setting method in accordance with a first embodiment of the present invention.
FIG. 3 is an operation flow chart of a tire pressure sensor device setting method in accordance with a first embodiment of the present invention.

### DETAILED DESCRIPTION OF THE INVENTION

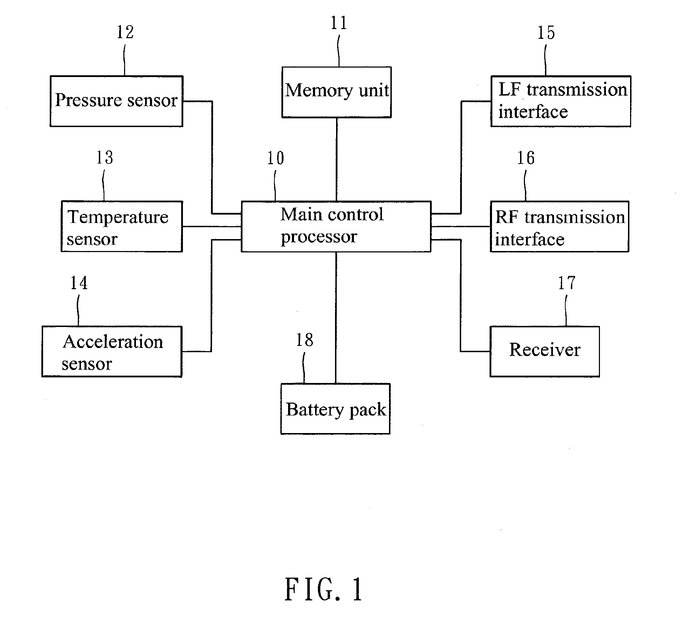

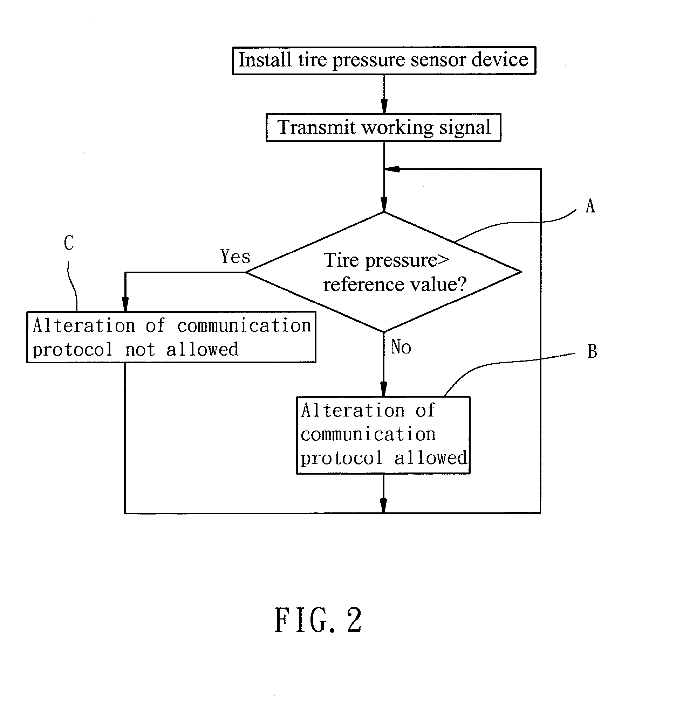

Referring to FIGS. 1 and 2, a tire pressure sensor device setting method in accordance with a first embodiment of the present invention is adapted for setting a tire pressure sensor device comprising a housing, an air nozzle located at one end of the housing, and a circuit board mounted in the housing, wherein the circuit board, as shown in FIG. 1, comprises a main control processor **10** installed in the circuit board, a memory unit **11** installed in the circuit board and electrically coupled to the main control processor **10** and having built therein multiple communication protocol software programs, a pressure sensor **12** installed in the circuit board and electrically coupled to the main control processor **10** and adapted for sensing the internal tire pressure of a tire of a vehicle, a temperature sensor **13** installed in the circuit board and electrically coupled to the main control processor **10** and adapted for sensing the internal temperature of the tire of the vehicle, an acceleration sensor **14** installed in the circuit board and electrically coupled to the main control processor **10** and adapted for sensing the acceleration value of the tire, a LF (low frequency) transmission interface **15** and a RF (radio frequency) transmission interface **16** installed in the circuit board and respectively electrically coupled to the main control processor **10** and adapted for transmitting sensed data to an on-vehicle receiver by a low frequency or radio frequency, a receiver **17** installed in the circuit board and electrically coupled to the main control processor **10** and adapted for receiving an external wireless signal and transmitting received external wireless signal to the main control processor **10,** and a battery pack **18** installed in the circuit board and electrically connected with the circuit layout of the circuit board and for providing the programmable tire pressure sensor device with the necessary working power supply.

Referring to FIG. 2, the tire pressure sensor device setting method in accordance with the first embodiment of the present invention includes the following steps:
1. Install the tire pressure sensor device in a tire of a vehicle.
2. Use a setting tool to transmit a working signal containing a communication protocol designation code and trigger code to the tire pressure sensor device wirelessly to start up the tire pressure sensor device, driving the pressure sensor of the tire pressure sensor device to detect the internal tire pressure of the tire of the vehicle and to transmit sensed data to the main control processor.
3. Provide step A to enable the main control processor to monitor the parameter value and matches monitored parameter value with a predetermined reference value, determining whether nor not the detected tire pressure value is greater than the reference value? And then proceed to step B if the detected tire pressure value is smaller than the reference value, or step C if the detected tire pressure value is greater than the reference value.

When entered step B, the main control processor keeps receiving another wireless signal from the receiver, allowing alteration of the communication protocol of the tire pressure sensor device. For example, if the detected tire pressure value is 103,4 kPa and the reference value is 193,1 kPa, the main control processor keeps receiving another wireless signal from the receiver for altering the setting of the tire pressure sensor device.

If the detected tire pressure value is greater than the reference value, it immediately proceeds to step C. When entered step C, the main control processor stops receiving any further wireless signal from the receiver for alteration of the communication protocol of the tire pressure sensor device, and thus the installation of the tire pressure sensor device is done. For example, if the tire is inflated to the standard value of 30~35psi, the tire pressure value at this time is greater than the reference value, and the main control processor does not receive any wireless signal from the receiver, and therefore the setting of the tire pressure sensor device is locked up.

This method prevents the setting of the installed tire pressure sensor device from being altered by mistake or erroneously set.

When going to alter the setting of the tire pressure sensor device, the operator simply needs to discharge the tire pressure to a level below the reference value. When the tire pressure becomes smaller than the reference value, the main control processor will receive a new working signal from the receiver for altering the setting of the tire pressure sensor.

The invention also provides an alternate form of the tire pressure sensor device setting method in accordance with the first embodiment of the present invention. This alternate form is substantially similar to that shown in FIG. 2 with the exception that the memory unit does not have any communication protocol software program stored therein.

This alternate form of tire pressure sensor device setting method in accordance with the first embodiment of the present invention includes the following steps:
1. Install the tire pressure sensor device in a tire of a vehicle.
2. Use a setting tool to transmit a working signal containing a communication protocol software program to the tire pressure sensor device wirelessly to start up the tire pressure sensor device, driving the pressure sensor of the tire pressure sensor device to detect the internal tire pressure of the tire of the vehicle and to transmit sensed data to the main control processor.
3. Provide step A to enable the main control processor to monitor the parameter value and matches monitored parameter value with a predetermined tire pressure reference value, determining whether nor not the detected tire pressure value is greater than the tire pressure reference value? And then proceed to step B if the detected tire pressure value is smaller than the tire pressure reference value, or step C if the detected tire pressure value is greater than the tire pressure reference value. When entered step B, the main control processor keeps receiving another wireless signal from the receiver, allowing alteration of the communication protocol of the tire pressure sensor device. For example, if the detected tire pressure value is 15psi and the tire pressure reference value is 28psi, the main control processor keeps receiving another wireless signal from the receiver for altering the setting of the tire pressure sensor device. When entered step C, the main control processor stops receiving any further wireless signal from the receiver for alteration of the communication protocol of the tire pressure sensor device, and thus the installation of the tire pressure sensor device is done. For example, if the tire is inflated to the standard value of 30~35psi, the tire pressure value at this time is greater than the tire pressure reference value, and the main control processor does not receive any wireless signal from the receiver, and therefore the setting of the tire pressure sensor device is locked up.

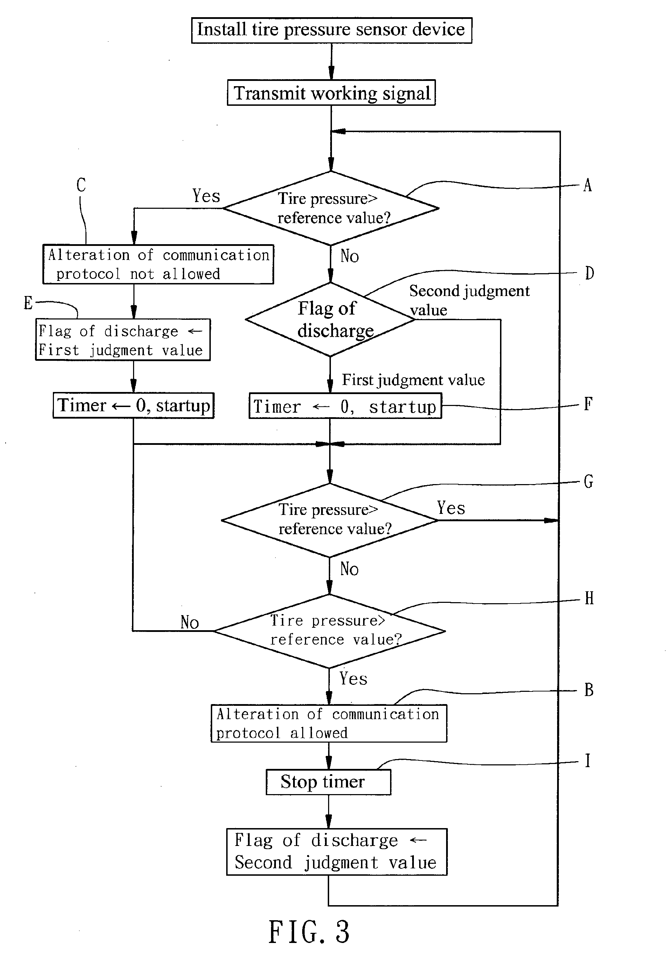

Further, in order to enhance the security when setting the tire pressure sensor device, another parameter value and a determination factor of a predetermined time value are added when the main control processor determines the tire pressure value to be greater or lower than the tire pressure reference value. As illustrated in FIG. 3, a tire pressure sensor device setting method in accordance with a second embodiment of the present invention is to perform the following steps in a proper order.

Install the tire pressure sensor device in a tire of a vehicle and start up the tire pressure sensor device.

Run step A to enable the main control processor to monitor the parameter value and matches monitored parameter value with a predetermined reference value. At this time, the main control processor matches the detected tire pressure value with the predetermined tire pressure reference value and determines whether nor not the detected tire pressure value is greater than the tire pressure reference value? And then proceed to step D if the detected tire pressure value is smaller than the reference value, or step C if the detected tire pressure value is greater than the reference value.

Run step C where the main control processor stops receiving any wireless signal from the receiver to prohibit alteration of the existing communication protocol of the tire pressure sensor device and to lock up the setting of the tire pressure sensor device, and then proceed to step E.

Run step D where the main control processor determines whether or not the flag is the first judgment value? And then run step F, if positive, or step G, if negative.

Run step E to set the flag to be a first judgment value that prohibits alteration of the communication protocol, and then to reset and start the timer and then to run step G.

Run step F to reset and start the timer, and then to match the detected tire pressure value with the tire pressure reference value, and then return to run step A again if the detected tire pressure value is greater than the tire pressure reference value, or to run step H if the detected tire pressure value is lower than the tie pressure reference value.

Run step G to determine whether or not the detected tire pressure is greater than the tire pressure reference value? And then return to run step A again if the tire pressure value is greater than the tire pressure reference value, or proceed to run step G if tire pressure value is lower than the tire pressure reference value.

Run step H to determine whether or not the time value of the timer is greater than a predetermined time judgment reference value, and then to return to run step B if the time value of the timer is greater than the predetermined time judgment reference value, or return to run step G if the time value of the timer is smaller than the predetermined time judgment reference value.

Run step B where the main control processor accepts the wireless signal received by the receiver and enables the communication protocol of the tire pressure sensor device to be altered, and then run step 1. For example, if the detected tire pressure is 103,4 kPa and the tire pressure reference value is 199,9 kPa, the main control processor accepts the wireless signal received by the receiver and alters the setting of the tire pressure sensor device.

Run step I to stop the counting of the timer and to keep the value of the timer, and then to alter the flag to become the second judgment value, for example, alter the flag to become 1, and then to return to run step A.

The tire pressure sensor device setting method in accordance with the second embodiment of the present invention can prevent alteration of the communication protocol by mistake before inflation of the tire and after the setting of the communication protocol, enhancing the security level of the setting of the communication protocol of the tire pressure sensor device.

Although particular embodiments of the invention have been described in detail for purposes of illustration, various modifications and enhancements may be made without departing from the scope of the invention as defined by the appended claims.

## Claims

1. A tire pressure sensor device setting method for setting a tire pressure sensor, said tire pressure sensor device comprises a pressure sensor (12), a main control processor (10), and a receiver (17), the tire pressure sensor device setting method comprising the step of installing said tire pressure sensor device in a tire of a vehicle and starting up said tire pressure sensor device,
**characterized by** the steps of:
(A) enabling said main control processor (10) to monitor a parameter value and matches the monitored parameter value with a predetermined tire pressure reference value, and then proceeding to step (B) if the value of the tire pressure detected by said pressure sensor is smaller than said predetermined tire pressure reference value, or step (C) if the value of the tire pressure detected by said pressure sensor is greater than said predetermined tire pressure reference value;
(B) enabling said main control processor (10) to receive a wireless signal from said receiver (17) for altering the communication protocol of said tire pressure sensor device; and
(C) enabling said main control processor (10) to stop receiving a wireless signal from said receiver (17) and to prohibit alteration of the communication protocol of said tire pressure sensor device, thereby finishing the installation of said tire pressure sensor device.

2. The tire pressure sensor setting method as claimed in claim 1, further comprising, after step (A) and before step (B), the steps of:
(D) enabling said main control processor to determine the flag to be a first judgment value or not to be a first judgment value, and then proceeding to step (F) if the flag is the first judgment value, or step (G) if the flag is not the first judgment value;
(F) resetting the timer and then starting up said timer, and then enabling said main control processor (10) to match the value of the tire pressure detected by said pressure sensor with said predetermined tire pressure reference value, and then returning to step (A) if the value of the tire pressure detected by said pressure sensor is greater than said predetermined tire pressure reference value, or proceeding to step (H) if the value of the tire pressure detected by said pressure sensor is smaller than said predetermined tire pressure reference value;
(G) matching the value of the tire pressure detected by said pressure sensor to be greater or not greater than said predetermined tire pressure reference value, and then returning to step (A) if the value of the tire pressure detected by said pressure sensor is greater than said predetermined tire pressure reference value, or proceeding to step (H) if the value of the tire pressure detected by said pressure sensor is smaller than said predetermined tire pressure reference value; and
(H) determining the time value of the timer to be greater than or not greater than a predetermined time judgment reference value, and then returning to step (B) if the time value of the timer is greater than said predetermined time judgment reference value, or step (G) if the time value of the timer is smaller than said predetermined time judgment reference value.

3. The tire pressure sensor setting method as claimed in claim 1, further comprising, after step (C), the step of: (E) setting the flag to be a first judgment value that prohibits alteration of the communication protocol of said tire pressure sensor device, and then resetting and starting the timer and then proceeding to step (G).

4. The tire pressure sensor setting method as claimed in claim 1, wherein during step (B) said main control processor (10) accepts the wireless signal received by said receiver (17) and enables the communication protocol of said tire pressure sensor device to be altered, and then runs step (I) to stop the counting of the timer and to keep the value of the timer, and then to alter the flag to become a second judgment value, and then to return to run step (A).

5. The tire pressure sensor setting method as claimed in claim 1, wherein starting up said tire pressure sensor device is done by: using a setting tool to transmit a working signal to said tire pressure sensor device and to start up said tire pressure sensor device.

6. The tire pressure sensor setting method as claimed in claim 5, wherein said working signal contains a communication protocol designation code and a trigger code.

7. The tire pressure sensor setting method as claimed in claim 5, wherein said working signal contains a communication protocol software program.

8. The tire pressure sensor setting method as claimed in claim 6, wherein said memory unit of said tire pressure sensor device is blank, having no communication protocol software program stored therein.

9. The tire pressure sensor setting method as claimed in claim 7, wherein said memory unit of said tire pressure sensor device has stored therein a communication protocol software program.

## Patentansprüche

1. Reifendrucksensoreinrichtungs-Einstellungsverfahren zum Einstellen eines Reifendrucksensors, wobei die Reifendrucksensoreinrichtung einen Drucksensor (12), einen Hauptsteuerungs-Prozessor (10) und einen Empfänger (17) umfasst, wobei das Reifendrucksensoreinrichtungs-Einstellungsverfahren den Schritt umfasst, Installieren der Reifendrucksensoreinrichtung in einen Reifen eines Fahrzeugs und Starten der Reifendrucksensoreinrichtung,
gekennzeichnet durch die Schritte:
(A) Ermöglichten, dass der Hauptsteuerungs-Prozessor (10) einen Parameter-Wert überwacht und den überwachten Parameterwert mit einem bestimmten Referenz-Druckwert abgleicht, und dann Weitergehen zu Schritt (B), wenn der Wert des von dem Drucksensor erfassten Reifendrucks kleiner ist als der bestimmte Referenz-Reifendruckwert, oder zu Schritt (C), wenn der Wert des von dem Drucksensor erfassten Reifenrucks größer ist als der bestimmte Referenz-Reifendruckwert;
(B) Ermöglichen, dass der Hauptsteuerungs-Prozessor (10) ein drahtlos übermitteltes Signal von dem Empfänger (17) erhält, um das Kommunikationsprotokoll der Reifendrucksensoreinrichtung zu ändern: und
(C) Ermöglichen, dass der Hauptsteuerungs-Prozessor (10) aufhört, von dem Empfänger (17) ein drahtlos übermitteltes Signal zu empfangen, und eine Änderung des Kommunikationsprotokolls der Reifendrucksensoreinrichtung zu verhindern, wodurch die Installation der Reifendrucksensoreinrichtung beendet ist.

2. Reifendrucksensoreinrichtungs-Einstellungsverlahren nach Anspruch 1, welches weiter nach Schritt (A) und vor Schritt (B) die Schritte umfasst:
(D) Ermöglichen, dass der Hauptsteuerungs-Prozessor das Identifizierungssignal als einen ersten Bewertungswert oder als keinen ersten Bewertungswert bestimmt, und dann Weitergehen zu Schritt (F), wenn das Identifizierungssignal der erste Bewertungswert ist. oder zu Schritt (G), wenn das Identifizierungssignal nicht der erste Bewertungswert ist;
(F) Rücksetzen des Timers und dann Starten des Timers, und dann Ermöglichen, dass der Hauptsteuerungs-Prozessor (10) den Wert des durch den Drucksensor erfassten Reifendrucks mit dem bestimmten Referenz-Reitendruckwert abgleicht, und dann Rückkehren zu Schritt (A), wenn der Wert des durch den Drucksensor erfassten Reifendrucks größer ist als der bestimmte Referenz-Reifendruckwert, oder Weitergehen zu Schritt (H), wenn der Wert des durch den Drucksensor erfassten Reifendrucks kleiner ist als der bestimmte Referenz-Reitendruckwert;
(G) Abgleichen des Werts des von dem Drucksensor als größer oder nicht größer als der bestimmte Referenz-Reifendruckwert erfassten Reifendrucks, und dann Rückkehren zu Schritt (A), wenn der Wert des von dem Drucksensor erfassten Reifendrucks größer ist als der bestimmte Referenz-Reifendruckwert, oder Weitergehen zu Schritt (H), wenn der Wert des von dem Drucksensor erfassten Reifendrucks kleiner ist als der bestimmte Referenz-Reifendruckwert; und
(H) Bestimmen, ob der Zeitwert des Timers größer oder nicht größer ist als ein bestimmter Zeitbewertungs-Referenzwert, und dann Rückkehren zu Schritt (B), wenn der Zeitwert des Timers größer ist als der bestimmte Zeitbewertungs-Referenzwert, oder zu Schritt (G), wenn der Zeitwert kleiner ist als der bestimmte Zeitbewertungs-Referenzwert.

3. Reifendrucksensoreinrichtungs-Einstellungsverfahren nach Anspruch 1, welches nach Schritt (C) weiter den Schritt (E) umfasst: Setzen des Identifizierungssignales als ersten Bewertungswert, der eine Änderung des Kommunikationsprotokolls der Reifendrucksensoreinrichtung verhindert und dann Rücksetzen des Timers und dann Weitergehen zu Schritt (G).

4. Reifendrucksensoreinrichtungs-Einstellungsverfahren nach Anspruch 1, wobei während Schritt (B) der Hauptsteuerungs-Prozessor (10) das von dem Spannelement (17) empfangene, drahtlos übermittelte Signal empfängt und eine Änderung des Kommunikationsprotokolls der Reifendrucksensoreinrichtung ermöglicht, und dann zu Schritt (I) weitergeht, um den Zählvorgang des Timers zu stoppen und den Wert des Timers zu halten, und dann das Identifizierungssignal zu einem zweiten Bewertungswert zu ändern, und dann zu Schritt (A) zurückzukehren.

5. Reifendrucksensoreinrichtungs-Einstellungsverfahren nach Anspruch 1, wobei das Starten der Reifendrucksensoreinrichtung bewirkt wird durch: Verwendung eines Einstellwerkzeugs zur Übermittlung eines Arbeitssignals zu der Reifendrucksensoreinrichtung und Starten der Reifendrucksensoreinrichtung.

6. Reiiendrucksensoreinrichtungs-Einstellungsverfahren nach Anspruch 5, wobei das Arbeitssignal ein Kommunikationsprotokoll-Markierungscode und ein Auslösecode enthält.

7. Reifendrucksensoreinrichtungs-Einstellungsverfahren nach Anspruch 5, wobei das Arbeitssignal ein Kommunikations-Softwareprogramm enthält.

8. Reifendrucksensoreinrichtungs-Einstellungsverfahren nach Anspruch 6, wobei die Speichereinheit der Reifendrucksensoreinrichtung leer ist und kein darin gespeichertes Kommunikations-Softwareprogramm aufweist.

9. Reifendrucksensoreinrichtungs-Einstellungsveriahren nach Anspruch 7, wobei die Speichereinheit der Reifendrucksensoreinrichtung ein Kommunikations-Softwareprogramm gespeichert hat.

## Revendications

1. Procédé de réglage d'un dispositif capteur de pression de pneu pour régler un capteur de pression de pneu, ledit dispositif capteur de pression de pneu comprenant un capteur de pression (12), un processeur de commande principal (10) et un récepteur (17), le procédé de réglage d'un dispositif capteur de pression de pneu comprenant l'étape consistant à installer ledit dispositif capteur de pression de pneu dans un pneu d'un véhicule et à démarrer ledit dispositif-capteur de pression de pneu,
**caractérisé par** les étapes consistant à :
(A) permettre audit processeur de commande principal (10) de surveiller une valeur de paramètre et de faire correspondre la valeur de paramètre surveillée avec une valeur de référence de pression de pneu prédéfïnie, et puis passer à l'étape (B) si la valeur de la pression de pneu détectée par ledit capteur de pression est inférieure à ladite valeur de référence de pression de pneu prédéfinie, ou à l'étape (C) si la valeur de la pression de pneu détectée par ledit capteur de pression est supérieure à ladite valeur de référence de pression de pneu prédéfinie :
(B) permettre audit processeur de commande principal (10) de recevoir un signal sans fil dudit récepteur (17) pour modifier le protocole de communication dudit dispositif capteur de pression de pneu ; et
(C) permettre audit processeur de commande principal (10) d'arrêter la réception d'un signal sans fil dudit récepteur (17) et d'interdire la modification du protocole de communication dudit dispositif capteur de pression de pneu, ce qui termine l'installation dudit dispositif capteur de pression de pneu.

2. Procédé de réglage de capteur de pression de pneu selon la revendication 1, comprenant en outre, après l'étape (A) et avant l'étape (B), les étapes consistant à :
(D) permettre audit processeur de commande principal de déterminer que la balise est une première valeur d'estimation ou n'est pas une première valeur d'estimation, et puis passer à l'étape (F) si la balise est la première valeur d'estimation, ou à l'étape (G) si la balise n'est pas la première valeur d'estimation ;
(F) réinitialiser la minuterie et puis démarrer ladite minuterie, et puis permettre audit processeur de commande principal (10) de faire correspondre la valeur de la pression de pneu détectée par ledit capteur de pression à ladite valeur de référence de pression de pneu prédéfinie, et puis revenir à l'étape (A) si la valeur de la pression de pneu détectée par ledit capteur de pression est supérieure à ladite valeur de référence de pression de pneu prédéfinie, ou passer à l'étape (H) si la valeur de la pression de pneu détectée par ledit capteur de pression est inférieure à ladite valeur de référence de pression de pneu prédéfinie ;
(G) faire correspondre la valeur de la pression de pneu détectée par ledit capteur de pression pour qu'elle soit supérieure ou non supérieure à ladite valeur de référence de pression de pneu prédéfnie, et puis revenir à l'étape (A) si la valeur de la pression de pneu détectée par ledit capteur de pression est supérieure à ladite valeur de référence de pression de pneu prédéfïnie, ou passer à l'étape (H) si la valeur de la pression de pneu détectée par ledit capteur de pression est inférieure à ladite valeur de référence de pression de pneu prédéfinie ; et
(H) déterminer si la valeur de temps de la minuterie est supérieure ou n'est pas supérieure à une valeur de référence d'estimation de temps prédéfinie, et puis revenir à l'étape (B) si la valeur de temps de la minuterie est supérieure à ladite valeur de référence d'estimation de temps prédéfinie, ou à l'étape (G) si la valeur de temps de la minuterie est inférieure à ladite valeur de référence d'estimation de temps prédéfinie.

3. Procédé de réglage de capteur de pression de pneu selon la revendication 1, comprenant en outre, après l'étape (C), l'étape consistant à : (E) définir la balise pour qu'elle soit une première valeur d'estimation qui interdit la modification du protocole de communication dudit dispositif capteur de pression de pneu, et puis réinitialiser et démarrer la minuterie, et puis passer à l'étape (G).

4. Procédé de réglage de capteur de pression de pneu selon la revendication 1, dans lequel, pendant l'étape (B), ledit processeur de commande principal (10) accepte le signal sans fil reçu par ledit récepteur (17) et permet au protocole de communication dudit dispositif capteur de pression de pneu d'être modifié, et puis exécute l'étape (1) pour arrêter le comptage de la minuterie et pour conserver la valeur de la minuterie, et puis pour modifier la balise pour qu'elle devienne une seconde valeur d'estimation, et puis pour revenir à l'exécution de l'étape (A).

5. Procédé de réglage de capteur de pression de pneu selon la revendication 1, dans lequel le démarrage dudit dispositif capteur de pression de pneu est effectué en : utilisant un outil de réglage pour transmettre un signal de travail audit dispositif capteur de pression de pneu et pour démarrer ledit dispositif capteur de pression de pneu.

6. Procédé de réglage de capteur de pression de pneu selon la revendication 5, dans lequel ledit signal de travail contient un code de désignation de protocole de communication et un code déclencheur.

7. Procédé de réglage de capteur de pression de pneu selon la revendication 5, dans lequel ledit signal de travail contient un programme logiciel de protocole de communication.

8. Procédé de réglage de capteur de pression de pneu selon la revendication 6, dans lequel ladite unité de mémoire dudit dispositif capteur de pression de pneu est vierge, ne possédant aucun programme logiciel de protocole de communication stocké dedans.

9. Procédé de réglage de capteur de pression de pneu selon la revendication 7, dans lequel ladite unité de mémoire dudit dispositif capteur de pression de pneu stocke en son sein un programme logiciel de protocole de communication.
